# EUROPEAN PATENT APPLICATION

(11) **EP 4 429 208 A1**
(43) Date of publication of application: **11.09.2024**
(21) Application number: 24162442.8
(22) Date of filing: 08.03.2024
(51) Int. Cl.: H04L 67/565, H04L 69/08, H04L 69/18, G05B 19/414, B25J 9/16, H04L 67/12

(54) **DATA COMMUNICATION IN A DEVICE DRIVER SUPPORTING MULTIPLE ENCODER PROTOCOLS**

(30) Priority: 10.03.2023 US 202363451497 P
(71) Applicant: Hengstler GmbH, 78554 Aldingen (DE)
(72) Inventor: BUECHER, Johann, 78554 ALDINGEN (DE)
(74) Representative: Cabinet Beaumont

(57) **Abstract**

A device driver comprises a device controller and a first encoder provides encoder data according to a first encoder protocol capable of being converted to an associated first controller protocol. In the device driver, encoder data conforming to a first encoder protocol is received, wherein: the first encoder protocol is not the same as a second encoder protocol, the second encoder protocol is capable of being converted to an associated second controller protocol that is not the same as a first controller protocol associated with the first encoder protocol, and the device controller is configured according to the second controller protocol. The encoder data is converted, according to at least one controller protocol conversion rule, into converted controller data conforming to the second controller protocol that is thereafter provided to the device controller.

## Description

### FIELD

The present disclosure relates to motion-capable devices operating in systems comprising an encoder associated therewith and in communication with a device driver. In particular, the present disclosure relates to data communication in a device driver supporting multiple encoder protocols.

### BACKGROUND

Motion-capable devices, such as motors, linear actuators, etc., are well known in the art. Such devices are often equipped with a built in feedback element, as in the case of servo motors, or are equipped with an external feedback element, which feedback element provides data to a device driver indicative of the operational state of the device. Such device drivers are capable of interpreting such data to understand the operational state of the device, and (in conjunction with a motion controller) to provide control commands to the device. For example, servo motors are often equipped with a rotational sensor or encoder capable of generating precise positional and velocity data of the motor shaft. For applications in which safety is particularly important, such encoders are also often capable of generating redundant safety data (as defined by various well-known safety standards such as the IEC 61508, ISO 13849 and EN 61800 standards concerning the position and speed of the motor shaft. Furthermore, it is known in the art to associate additional sensor types (e.g., vibration, temperature, etc.) with the device and for data generated by such additional sensors to be routed through the encoder. Particularly in the case of applications requiring such positional data notwithstanding the occurrence of a power off-on cycle, so-called absolute position information can result in significant quantities of data being generated by the encoder, e.g., it is not uncommon for over 2²⁰ changes in sensed position to be detected during a single revolution of the monitored shaft, and for such shafts to rotate at speeds up to 10,000 revolutions per minute.

To communicate such voluminous data, and to assist device drivers in correctly interpreting such data, communication protocols have been developed by various encoder manufacturers, which protocols are capable of communicating digitally-represented encoder data (as well as power) using, most recently, only a 2-wire connection between the encoder and the related device driver. Examples of commonly known 2-wire encoder protocols include the HIPERFACE DSL protocol developed by Sick Stegmann GmbH, the ENDAT 3.0 protocol developed by Dr. Johannes Heidenhain GmbH, and the SCS OPEN LINK protocol developed by Hengstler GmbH.

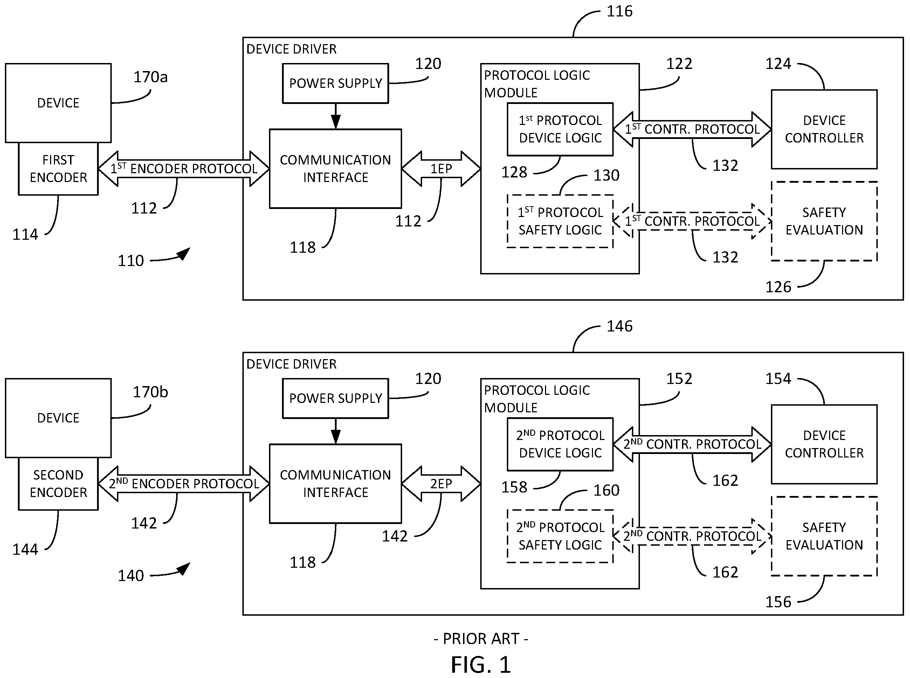

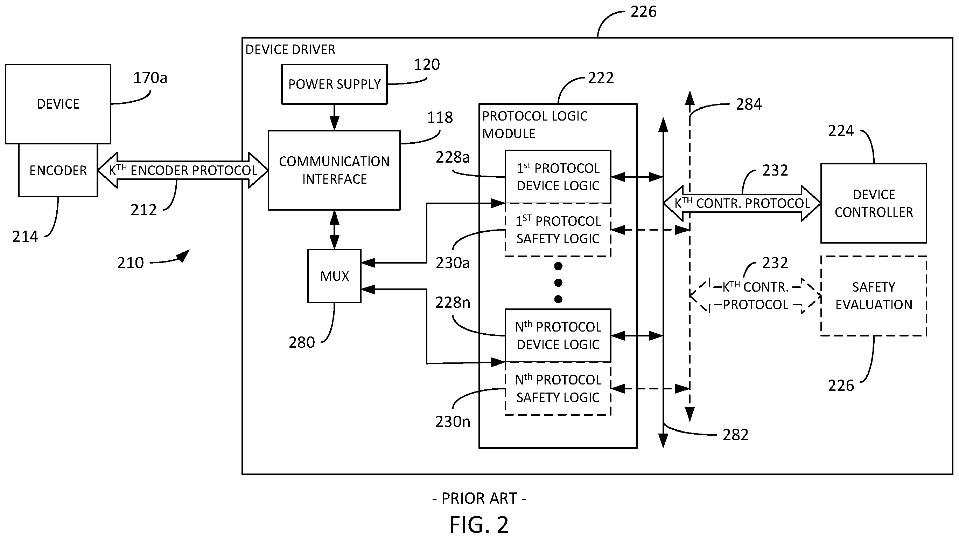

FIG. 1 (in which like reference numerals refer to like elements) illustrates typical implementations of different encoder protocols. In particular, FIG. 1 illustrates systems 110, 140 respectively operating on the basis of encoder data (and, optionally, safety data) conforming to respective first and second encoder protocols 112, 142. As used herein, an encoder protocol defines the particular type, timing/frequency and formatting of positional (and, optionally, safety data) supplied by an encoder. (The optional nature of any safety-related data or structure is indicated in the drawings by the dashed lines depicted in FIGs. 1-3.) Thus, by way of non-limiting example, the first encoder protocol 112 could be the SCS OPEN LINK protocol, whereas the second encoder protocol 142 could be the HIPERFACE DSL protocol. As shown in FIG. 2, a first encoder 114 and a second encoder 144 are associated with separate instances of a device 170a, 170b (such as a servo motor or the like).

Each of the encoders 114, 144 communicates with a device driver 116, 146 via its respective first or second encoder protocol 112, 142. Both of the device drivers 116, 146 implement a communication interface 118 that supports the transmission and reception of raw data (i.e., at the physical layer in terms of the well-known Open Systems Interconnection (OSI) model using, for example, the also well-known RS-232 or RS-485 data communication standards) to/from the respective encoders 114, 144 regardless of the particular encoder protocol 112, 142 being used. As further known in the art, both devices drivers 116, 146 may include power supply circuitry 120 to supply power to the encoders 114, 144. The communication interfaces 118 in both device drivers 116, 146 supply the received data (typically conditioned by the communication interface to better facilitate representation of the data signals) conforming to the respective protocols 112, 142 to respective protocol logic modules 122, 152 (sometimes referred to in the art as "IP Cores").

The respective protocol logic modules 122, 152 that receive encoder/safety data conforming to the respective protocols 112, 142 are, in turn, in communication with corresponding instances of a device controller 124, 154 and, when needed, a safety evaluation module 126, 156. The device controllers 124, 154 are typically implemented using a suitable integrated circuit processing device such as a microcontroller and/or digital signal processor as known in the art. The device controllers 124, 154 operate to perform the processing necessary to ascertain the operational status of the devices 170a, 170b and to drive the devices 170a, 170b (e.g., in the case of motors, by controlling frequency of a 3-phase, alternating current power signal) in response thereto. Similarly, the safety evaluation modules 126, 156 perform the interpretation of the provided safety data to ensure that the respective devices 170a, 170b are in a safe state at any given time. The protocol logic modules 122, 152, which are typically implemented using field programmable gate arrays (FPGAs), comprise respective protocol device logic modules 128, 158 (and, where applicable, protocol safety logic modules 130, 160) that operate to terminate the respective encoder protocols 112, 142 and convert the encoder data into respective first and second controller protocols 132, 162. As used herein, a controller protocol defines the particular type, time/frequency and formatting of data that can be consumed by the device controllers 124, 153 (and the safety evaluation modules 126, 156, when provided).

As known in the art, the respective controller protocols 132, 162 are typically based on a different bit-level communication protocol suitable to support communications between integrated circuits, such as the well-known serial peripheral interface (SPI) protocol. Further, the data communicated via the controller protocols 132, 162 (controller data) is typically either a portion of the encoder data received via the corresponding encoder protocol 112, 142 or transformed versions thereof dictated by the corresponding encoder protocol 112, 142. That is, the controller protocols 132, 162, while being defined by and dependent upon the corresponding encoder protocols 112, 142, are also unified in that they are based on a single, underlying communication protocol. Thus, the fact that each of the illustrated systems 110, 140 relies on different encoder protocols 112, 142 and controller protocols 132, 162 requires that the implementations of the respective device controllers 124, 154 and safety evaluation modules 126, 156 are dependent on the respective protocols, not to mention that the same holds true for the respective protocol logic modules 122, 152.

In order to better accommodate the existence of multiple encoder/controller protocols, a system 210 as illustrated in FIG. 2 has been proposed, in which like reference numerals refer to like elements found in FIG. 1. In this case, an encoder 214 is provided that provides encoder data conforming to a K^{th} encoder protocol 212 out of N different protocols supported by the device driver 226, where N ≥ 2. Here, the protocol logic module 222 is configured to implement protocol device logic 228a-228n and, where necessary, the protocol safety logic 230a-230n for the N different encoder/controller protocols. Given the implementation of complete protocol logic for each of the N different encoder/controller protocols, it becomes necessary in this implementation to provide for a multiplexer 280 to select only the K^{th} set of the N different logic modules 228a-228n, 230a-230n to communicate with the communication interface 118. Similarly, in this implementation, one or more buses 282, 284 are also provided between the protocol logic module 222 and the device controller 224 and safety evaluation module 226.

In the interest of driving sales of encoders, an encoder manufacturer will typically work closely with device driver manufacturers to ensure proper implementation of the manufacturer's protocol. Similar cooperation is often required between encoder manufacturers and servo motor manufacturers, who try to develop a portfolio of products required by their customers (machine builders). Machine builders, in turn, will often have a preferred encoder protocol and, consequently, servo motor and encoder manufacturers supporting that preferred protocol. Even with such cooperation, the deployment of an encoder protocol in a device driver-especially, the device controllers-requires significant effort on the part of the device driver manufacturer, so much so that decisions to implement new protocols is often a top level management decision. Indeed, the level of effort is such that the solution proposed by the system 210 of FIG. 2 is likely impracticable because, despite the provision of a protocol logic module 222 supporting N different protocols (and ignoring the increased cost and complexity resulting from such a protocol logic module 222, as well as the additional provision of the multiplexer 280 and bus 282, 284 structures), the substantial burden of supporting up to N different protocols in the device controller 224 and/or safety evaluation module 226 is prohibitive for device driver manufacturers.

Further complicating matters are the often competing interests of servo motor and drive manufacturers and machine builders resulting from the need for maintenance and repairs. Generally, it is exceedingly difficult to exchange the brand of the control system (device driver) for a given machine during its lifetime, whereas it is much easier to exchange the brand of servomotor during the machine's lifetime, which further incentivizes servo motor manufacturers to develop their own encoder protocols and device drivers in order to better participate in the maintenance and repairs market.

The resulting tendency to push end users (machine builders) toward protocol-dependent, proprietary solutions can create a difficult position for such end users, who often end up being "locked" into a relationship with a single servo motor and/or device driver manufacturer. The resulting lack of alternate vendors can result in an inability of such end users to properly react to adverse supplier events (e.g., out of stock delays), obtain replacement parts from different sources or participate in new encoder-related technology developments.

Thus, solutions that provide greater interoperability between the various encoder protocol regimes would represent a welcome advance in the art.

### SUMMARY

The above-noted shortcomings of prior art solutions are addressed through the provision of techniques for data transmission in a device controller in accordance with the instant disclosure. In an embodiment, a method and apparatus is provided for data transmission by a device driver in a system comprising a device controlled by the device driver and monitored by a first encoder in communication with the device driver. The device driver comprises a device controller for controlling operation of the device, and the first encoder provides encoder data according to a first encoder protocol capable of being converted to an associated first controller protocol. The method, in the device driver, comprises receiving, from the first encoder, the encoder data conforming to the first encoder protocol, wherein the first encoder protocol is not the same as a second encoder protocol, wherein the second encoder protocol is capable of being converted to an associated second controller protocol that is not the same as the first controller protocol, and wherein the device controller is configured according to the second controller protocol. The method further comprise converting the encoder data into converted controller data conforming to the second controller protocol according to at least one controller protocol conversion rule and thereafter providing the converted controller data to the device controller.

In an embodiment, the device controller drives the device based on the converted controller data.

In an embodiment, the first encoder protocol is defined by a first encoder manufacturer and the second encoder protocol is defined by a second encoder manufacturer. For example, in presently preferred embodiments, the first encoder protocol may be SCS OPEN LINK protocol and the second encoder protocol may be HIPERFACE DSL protocol, or the first encoder protocol may be SCS OPEN LINK protocol and the second encoder protocol may be ENDAT protocol. In another embodiment, the first encoder protocol and the second encoder protocol are both defined by a first encoder manufacturer and are different versions of each other.

In an embodiment, the at least one controller protocol conversion rule comprises at least one rule for converting data formatting differences for a data type between the first and second encoder protocols. Alternatively or additionally, the at least one controller protocol conversion rule comprises at least one rule for converting data rate differences for a data type between the first and second encoder protocols. Furthermore, the at least one controller protocol conversion rule may comprise at least one rule for inferring data corresponding to a data type supported by the second encoder protocol but not the first encoder protocol.

In an embodiment, the at least one controller protocol conversion rule is added to the device driver in response to input received via a user interface of the device driver. Alternatively, the at least one controller protocol conversion rule may be added to the device driver in response to detection by the device driver of an encoder type of the first encoder.

In an embodiment in which the device driver comprises a safety evaluation module, the method may further comprise receiving, from the first encoder, encoder safety data conforming to the first encoder protocol. The encoder safety data is then converted into converted controller safety data conforming to the second controller protocol according to at least one controller safety protocol conversion rule. Thereafter, the converted controller safety data is provided to the safety evaluation module.

In an embodiment, the method may further comprise receiving, from the data controller, additional controller data conforming to the second controller protocol. The additional controller data is then converted into converted encoder data conforming to the first encoder protocol according to the at least one controller protocol conversion rule. Thereafter, the converted encoder data is provided to the first encoder.

### BRIEF DESCRIPTION OF THE DRAWINGS

The foregoing and other features and advantages will be discussed in detail in the following non-limiting description of specific embodiments in connection with the accompanying drawings, in which:
FIG. 1 is a block diagram illustrating encoder based systems and the use of different encoder protocols in accordance with prior art techniques;
FIG. 2 is a block diagram illustrating an encoder based system and the use of a protocol logic module implementing multiple encoder protocols in accordance with prior art techniques;
FIG. 3 is a block diagram illustrating an encoder based system and the use of at least one conversion rule in a protocol logic module implementing in accordance with the instant disclosure;
FIG. 4 is a block diagram of a simplified illustration of an implementation of a protocol logic module in accordance with the instant disclosure; and
FIG. 5 is a flow chart illustrating processing in accordance with the instant disclosure.

### DETAILED DESCRIPTION OF THE PRESENT EMBODIMENTS

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the term "substantially" or similar words requiring subjective comparison are intended to mean "within manufacturing tolerances" unless stated or implied by context otherwise.

As used herein, the phrase "operatively connected" refers to at least a functional relationship between two elements and may encompass configurations in which the two elements are directed connected to each other, i.e., without any intervening elements, or indirectly connected to each other, i.e., with intervening elements.

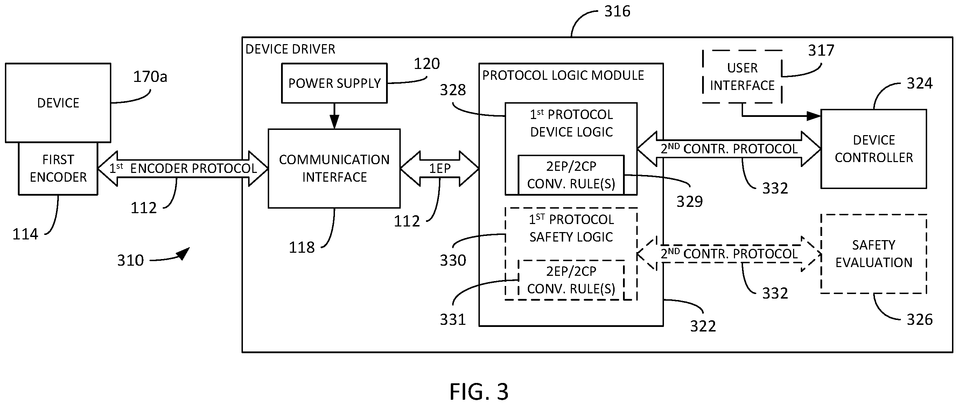

Referring now to FIG. 3, a system 310 in accordance with the instant disclosure is illustrated, and in which like reference numerals refer to like elements found in FIG. 1. In this system, the first encoder 114, again providing encoder data conforming to a first encoder protocol, is able to communicate with a device controller 324 (and optional safety evaluation module 326) that is (are) configured to receive controller data in conformance with a second controller protocol 332. To this end, a protocol logic module 322 is provided in which a first protocol device logic module 328 (and, optionally, a first protocol safety logic module 330) is (are) also provided. As described in greater detail below, each of the logic modules 328, 330 is also configured to implement one or more controller protocol conversion rules 329, 331, which are configured to operate upon encoder data conforming to the first encoder protocol 112 and output controller data conforming to the second controller protocol 332.

In an embodiment, the protocol logic module 322 is implemented as an FPGA according to known techniques. In an alternative embodiment, however, the protocol logic module 322 could be implemented by a suitably programmed processing device, such as a microcontroller, digital signal processor, etc. once again using techniques well known in the art. Regardless of its implementation, the protocol logic module 322 is preferably configured to be reprogrammable and, more particularly, to permit reconfiguration of the one or more controller protocol conversion rules 329, 331 based on information identify the encoder protocol and controller protocols to be used in the system 310.

For example, in an embodiment and in accordance with known prior art techniques, the device driver 316 may comprise a user interface 317 capable of receiving user input. For example, the user interface 317 may take form of a graphical user interface, menu driven interface or the like, techniques for implementing which are well known to those having skill in the art. Furthermore, the user interface 317 could comprise a remote data input such that a remote terminal could be employed for this purpose. Thus equipped, the user interface 317 may be configured to permit a user to enter information identifying the encoder protocol employed by the first encoder 114 and/or information identifying the controller protocol used by the device controller 324 (and, optionally, the safety evaluation module 326). In an embodiment, this information may be provided to the device controller 324 or other processing capability implemented by or in communication with (as in the case of a remote terminal) the device driver 316. In this case, the device controller 324 may be provided with stored instructions, as in the case of memory associated with a processing device, or other programming that permits the device controller 324 (or other processing capability) to reconfigure the protocol device logic module 328 (and protocol safety logic module 330) to conform to the indicated encoder protocol and, more specifically, to provide one or more controller protocol conversion rules 329, 331 that permit the device controller 324 to operate with the encoder 114 despite any protocol differences therebetween.

Thus, for example, if the system 310 is originally configured to use a third encoder operating in accordance with a third encoder protocol, and the device controller is configured to operate according to the second controller protocol 332, the device controller 324 causes the protocol logic module to be configured in accordance with the third encoder protocol, and further causes appropriate controller protocol conversion rules, i.e., capable of converting encoder data conforming to the third encoder protocol to controller data conforming to the second controller protocol 332, to be configured in the relevant first protocol device logic module 328 and, optionally, the first protocol safety logic module 330. Thereafter, if user input is provided to reflect a change in the encoder (e.g., replacement) to an encoder that now uses the first encoder protocol, this information can cause the device controller 324 to reconfigure the protocol logic module 322 according to the first encoder protocol and, more specifically, to provide one or more controller protocol conversion rules 329, 331 in the protocol device logic module 328/ protocol safety logic module 330 that are compatible with the first encoder protocol and the second controller protocol, as shown in FIG. 3.

In an alternative embodiment, rather than relying on a user interface 317, the device controller 316 may be equipped with the capability to detect or infer information sufficient to permit the identification of the specific encoder protocol employed by the associated encoder 114. For example, according to one known prior art technique, the device driver 316 can be controlled to attempt communication with the encoder 114 in accordance with a selected protocol. If the encoder 114 responds with encoder data that conforms to the selected protocol, then the fact that the encoder 114 conforms to the selected protocol is confirmed. On the other hand, if the encoder 114 responds with encoder data that does not conform to the selected protocol, then another protocol is selected. This process is repeated until such time that a compatible protocol is identified. In another alternative, it may be possible for the encoder 114 to provide information that directly identifies the encoder protocol to which it adheres, or that identifies a type/brand of the encoder 114 such that the protocol can be inferred.

Regardless of the manner in which configuration of the protocol logic module 322 and the conversion rules 329, 331 is implemented, an advantage of the instant disclosure is that the controller protocol conversion rule(s) permit the device controller 324 to remain the same or, at most, changed very little, despite a change in the encoder protocol 112 used in the system 310. In this regard, it is appreciated that an implementation or configuration of the device controller 324 does not necessarily have to implement the relevant protocol with complete conformance to that protocol. Indeed, it is not uncommon in the art for a device controller instance to implement only a portion of (though, more typically, a majority of) a given protocol. As a result, a change in the encoder protocol 112 in keeping with the instant disclosure may still require at least some effort to alter the configuration of the device controller 324 in order to accommodate the change in encoder protocol 112. Nevertheless, the provision of the controller protocol conversion rules 329, 331 will significantly reduce, if not entirely eliminate, such effort as compared to prior art techniques.

By way of a presently preferred example, in a system 310 in which the device controller 324 is configured in accordance with the HIPERFACE DSL protocol, it becomes possible to change the first encoder 114 to be an encoder conforming to the SCS OPEN LINK protocol only through reprogramming of the protocol logic module 322, rather than requiring reconfiguration of the device controller 324/safety evaluation unit 326 itself. As another preferred example, a device controller configured in accordance with the ENDAT protocol may become compatible with an encoder conforming to the SCS OPEN LINK protocol. Of course, those skilled in the art will appreciate that other combinations of different encoder protocols similar to these examples are also readily achievable.

It is further appreciated that such compatibility transformations need not be limited to situations in which different encoder protocols from different encoder manufacturers are used, but could also be employed when changes between different versions of one encoder protocol are desired. For example, for a system 310 in which the device controller 324 is already configured to operate according to the ENDAT 2.2 protocol version, the controller protocol conversion rules(s) 329, 331 could be configured to permit use of an encoder conforming to the more recent ENDAT 3.0 protocol version. Likewise, the opposite scenario-a device controller employing the ENDAT 3.0 protocol to be rendered compatible with an encoder conforming to the ENDAT 2.2 protocol-could be equally accommodated.

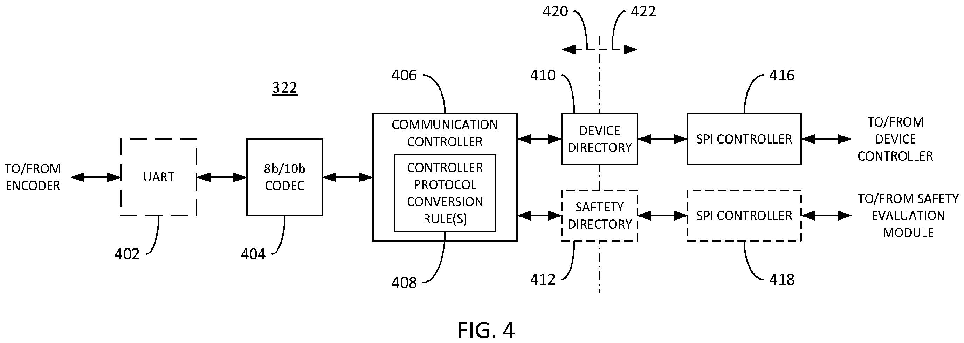

Referring now to FIG. 4, a simplified example of an implementation of a protocol logic module 322 in accordance with the instant disclosure is illustrated in block diagram form. In the illustrated embodiment, the protocol logic module 322 is illustrated as a FPGA have a number of suitably configured blocks 402-418 though, as noted above, one or more of the illustrated blocks could also be implemented in other suitable forms, such as using a programmable processing device such as an microcontroller or digital signal processor.

In this example, a universal asynchronous receiver/transmitter (UART) 402 is optionally provided to receive communication signals from. or provide communication signals to, an encoder as described above. As known in the art, the UART 402 may be used to implement digital communications via a two wire interface through implementation of a suitable communication protocol such as the well-known RS-232 or RS-485 data communication standards. It is appreciated that other devices more suitable for different communication channels, e.g., a four wire interface, may be equally employed, if at all. As further shown, an 8b/10b coder/decoder (codec) 404 may be provided, as known in the art, to convert incoming 8 bit words into 10 bit, D.C. balanced 10-bit symbols, or vice versa, thereby improving electrical performance characteristics required to implement a communication controller 406.

As further shown in FIG. 4, the communication controller 406 is in communication with at least a device directory 410 that serves as an interface for transferring encoder data that has been reformatted or otherwise transformed from an encoder protocol to a controller protocol (i.e., controller data) by the communication controller 406 (as described in further detail below). For example, in a presently preferred embodiment, the device directory 410 comprises a series of 256 byte-sized registers mapped in accordance with the controller protocol being employed, which registers are synchronously written to and read from (via signals not depicted in FIG. 4). In further accordance with this presently preferred embodiment, the device directory 410 is in communication with a SPI controller (or parallel interface) 416 that supports communications, according to the controller protocol, with a device controller of a device drive. As further shown in FIG. 4, an optional safety directory 412, preferably implemented in the same manner as the device directory 410, may be provided in communication with the communication controller 406 and another SPI controller/parallel interface 418 configured to convey safety-related data, also in conformance with the controller protocol, to/from a safety evaluation module. Reference numerals 420, 422 illustrate different data clocking domains, reflecting the fact that data in a first data clocking domain 420 is clocked at a higher speed than data clocked in a second data clocking domain 422, thus illustrating the data rate reduction effectuated by the encoder/controller protocols.

The communication controller 406 operates to terminate the encoder protocol and process the incoming encoder data (and safety data, if provided) into the corresponding controller protocol, as known in the art. As further shown, the communication controller 406 also comprises one more controller protocol conversion rules 408. As described above, the controller protocol conversion rules 408 operate to reformat or otherwise transform encoder data received according to a first encoder protocol into controller data according to a second controller protocol and vice versa. Generally, the implementation of each controller protocol conversion rule 408 will necessarily depend on the respective conventions of the respective encoder and controller protocols.

More particularly, controller protocol conversion rules 408 may fall within three general classes of rules: data formatting differences, data rate differences and inferring data. Rules concerning data formatting differences are directed to situations in which a data type provided in the encoder protocol finds an identical counterpart in the controller protocol, only formatted differently. Rules concerning data rate differences are directed to situations in which, once again, a data type provided in the encoder protocol finds an identical counterpart in the controller protocol. However, in this case, the data is provided according to different data rates or according to different frequencies within the respective encoder and controller protocols. Rules concerning inferential data are directed to situations in which data types supported by the controller protocol are not supported by the encoder protocol, but where it may be possible to infer values for the data type supported by the controller protocol. Various non-limiting examples of such conversion rules are described below.

As an example of a formatting differences rule, the HIPERFACE DSL protocol has so-called fast position data starting, in accordance with the SPI protocol, in hexadecimal, at address 10H (byte POS4) and ending at address 14H (byte POS0) in the device directory registers 410. On the other hand, the SCS OPEN LINK protocol has fast position data starting at address 26H (byte STD_DAT2) and ending at 2AH (byte STD_DAT6). Thus, in order to properly transfer such fast position data, a controller protocol conversion rule 408 must be provided that ensures correction mapping of this data in either direction.

As an example of a data rate differences rule, the HIPERFACE DSL protocol operates to provide full information on encoder position across 8 frames (at a clock rate of 82 kHz), whereas the SCS OPEN LINK protocol operates to provide such full encoder position information in 1 frame (at a clock rate of 16 kHz). Thus, in order to convey such full encoder position information, it is necessary to access such data across the 8 frame in which it is provided in the HIPERFACE DSL protocol, as opposed to the single frame in which it would be provided in the SCS OPEN LINK protocol, and vice versa.

As an example of an inferring data rule, the HIPERFACE DSL protocol provides signal quality monitoring data at address 03H, Bit0 through Bit3. In this case, the SCS OPEN LINK protocol does not have an equivalent functionality providing information on signal quality. In this case, it may be possible to infer signal quality data. For example, the SCS OPEN LINK protocol implements a so-called life counter function, which gives identity to each frame communicated, whereas HIPERFACE DSL does not provide such a function. With this data, it is possible to identify lost data frames, i.e., data frames that have not been verifiably received. However, at least to the extent occurrences of lost frames could indicate low signal quality, this data could be used to infer the signal quality information required by HIPERFACE DSL protocol. In this case, a controller protocol conversion rule 408 would be provided that monitors the incoming life counter data and infers signal quality data as required by the HIPERFACE DSL protocol.

As will be appreciated by those skilled in the art, other examples of such conversion rules may be readily derivable depending on the noted types of differences between any two encoder/controller protocols, or different versions of single protocols as noted above.

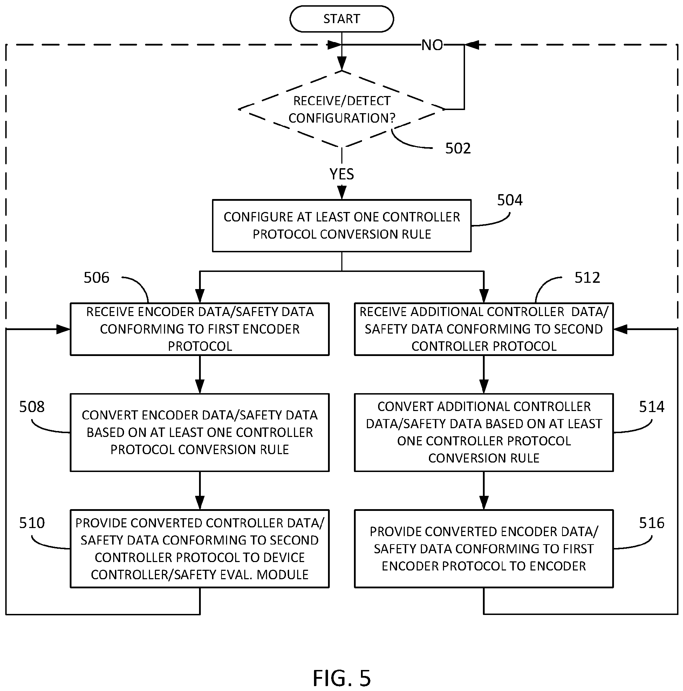

Referring now to FIG. 5, processing by a device driver in accordance with the instant disclosure is illustrated in flow chart form. For example, the processing illustrated in FIG. 5 may be performed by the above-described protocol logic modules and/or device controller. Regardless, processing optionally begins at block 502 where it is continuously determined whether any configuration information concerning the associated encoder protocol has been ascertained. When such configuration information is received or detected, processing continues at block 504 where at least one controller protocol conversion rule is configured in the protocol logic module, as described above. Thereafter, further processing may proceed along a first branch defined according to blocks 506-619 or along a second branch defined according to blocks 512-516.

The first branch concerns conversion of data received from the encoder and being conveyed to the device controller and/or safety evaluation module. Thus, at block 506, encoder data and/or safety data (when available) is received from the corresponding encoder, which encoder/safety data conforms to the first encoder protocol. Thereafter, at block 508, the received encoder/safety data is converted as needed according to at least one controller protocol conversion rule into controller data conforming to the second controller protocol. The resulting converted controller data/safety data is then provided to the device controller/safety evaluation module at block 510. The processing of blocks 506-510 is continuously performed as needed or until such time that new configuration data is ascertained at block 502.

On the other hand, the second branch concerns conversion of data received from the device controller and/or safety evaluation module and being conveyed to the encoder. Thus, at block 512, additional controller data/safety data, conforming to the second controller protocol, is received from the device controller and/or safety evaluation module. Thereafter, at block 514, the received additional controller data/safety data is converted as needed according to the at least one controller protocol conversion rule into converted encoder data conforming to the first encoder protocol. Thereafter, the resulting converted encoder data is then provided to the encoder at block 516. Once again, the processing of blocks 512-516 is continuously performed as needed or until such time that new configuration data is ascertained at block 502.

Techniques have been disclosed herein whereby a device driver may be configured to permit the use of two otherwise conflicting protocols, which might otherwise require incurring substantial effort to retrofit system as described above. This benefit is provided through recognition that appropriate conversions rules may be provided at the level of controller protocols where such competing protocols, while having significant differences as viewed from the encoder side, nevertheless share commonalities (e.g., the SPI protocol) that may serve as the basis for the creation of such conversion rules. In this manner, beneficial compatibility not previously provided in the art may now be provided. Further, these techniques avoid the need for increased cost and complexity of protocol logic modules, as in the case of the prior art solution illustrated in FIG. 2.

While the various embodiments in accordance with the instant disclosure have been described in conjunction with specific implementations thereof, it is evident that many alternatives, modifications and variations will be apparent to those skilled in the art. Accordingly, the preferred embodiments of the invention as set forth herein are intended to be illustrative only and not limiting so long as the variations thereof come within the scope of the appended claims and their equivalents.

## Claims

1. A method for data transmission by a device driver in a system comprising a device controlled by the device driver and monitored by a first encoder in communication with the device driver, wherein the first encoder provides encoder data according to a first encoder protocol capable of being converted to an associated first controller protocol, and wherein the device driver comprises a device controller for driving operation of the device, the method comprising, in the device driver:
receiving, from the first encoder, the encoder data conforming to the first encoder protocol, wherein the first encoder protocol is not the same as a second encoder protocol, wherein the second encoder protocol is capable of being converted to an associated second controller protocol that is not the same as the first controller protocol, and wherein the device controller is configured according to the second controller protocol;
converting the encoder data into converted controller data conforming to the second controller protocol according to at least one controller protocol conversion rule; and
providing the converted controller data to the device controller.

2. The method of claim 1, further comprising:
driving, by the device controller based on the converted controller data, the device.

3. The method of claim 1 or 2, wherein the at least one controller protocol conversion rule is added to the device driver:
in response to input received via a user interface of the device driver; and/or
in response to detection by the device driver of an encoder type of the first encoder.

4. The method of any of claims 1 to 3, wherein the device driver comprises a safety evaluation module, the method further comprising:
receiving, from the first encoder, encoder safety data conforming to the first encoder protocol;
converting the encoder safety data into converted controller safety data conforming to the second controller protocol according to at least one controller safety protocol conversion rule; and
providing the converted controller safety data to the safety evaluation module.

5. The method of any of claims 1 to 4, further comprising:
receiving, from the data controller, additional controller data conforming to the second controller protocol;
converting the additional controller data into converted encoder data conforming to the first encoder protocol according to the at least one controller protocol conversion rule; and
providing the converted encoder data to the first encoder.

6. A protocol logic module for use in a device driver operable to control a device and communicate with a first encoder configured to monitor the device, wherein the first encoder provides encoder data according to a first encoder protocol capable of being converted to an associated first controller protocol, and wherein the device driver comprises a device controller for driving operation of the device, the protocol logic module comprising:
programmable logic circuits configured to, or executable instructions stored in memory and operable when executed by a processor to cause the processor to:
receive, from the first encoder, the encoder data conforming to the first encoder protocol, wherein the first encoder protocol is not the same as a second encoder protocol, wherein the second encoder protocol is capable of being converted to an associated second controller protocol that is not the same as the first controller protocol, and wherein the device controller is configured according to the second controller protocol;
convert the encoder data into converted controller data conforming to the second controller protocol according to at least one controller protocol conversion rule; and
provide the converted controller data to the device controller.

7. The protocol logic module of claim 6, wherein the programmable logic circuits are implemented using a field programmable gate array.

8. The protocol logic module of claim 6 or 7, wherein the executable instructions, memory and processor are implemented by a microcontroller.

9. The method of any of claims 1 to 5, or the protocol logic module of any of claims 6 to 8, wherein the first encoder protocol is defined by a first encoder manufacturer and the second encoder protocol is defined by a second encoder manufacturer.

10. The method or protocol logic module of claim 9, wherein the first encoder protocol is SCS OPEN LINK and the second encoder protocol is HIPERFACE DSL.

11. The method or protocol logic module of claim 9, wherein the first encoder protocol is SCS OPEN LINK and the second encoder protocol is ENDAT.

12. The method of any of claims 1 to 5 or the protocol logic module of any of claims 6 to 8, wherein the first encoder protocol and the second encoder protocol are both defined by a first encoder manufacturer and are different versions of each other.

13. The method of any of claims 1 to 5 or 9 to 12, or the protocol logic module of any of claims 6 to 12, the at least one controller protocol conversion rule comprising at least one rule for converting data formatting differences for a data type between the first and second encoder protocols.

14. The method of any of claims 1 to 5 or 9 to 13 or the protocol logic module of any of claims 6 to 13, the at least one controller protocol conversion rule comprising at least one rule for converting data rate differences for a data type between the first and second encoder protocols.

15. The method of any of claims 1 to 5 or 9 to 14 or the protocol logic module of any of claims 6 to 14, the at least one controller protocol conversion rule comprising at least one rule for inferring data corresponding to a data type supported by the second encoder protocol but not the first encoder protocol.

16. The protocol logic module of any of claims 6 to 15, wherein the device driver comprises a safety evaluation module, and wherein the programmable logic circuits are further configured to, or the executable instructions are further operable when executed by the processor to cause the processor to:
receive, from the first encoder, encoder safety data conforming to the first encoder protocol;
convert the encoder safety data into converted controller safety data conforming to the second controller protocol according to at least one controller safety protocol conversion rule; and
provide the converted controller safety data to the safety evaluation model.

17. The protocol logic module of any of claims 6 to 16, wherein the programmable logic circuits are further configured to, or the executable instructions are further operable when executed by the processor to cause the processor to:
receive, from the data controller, additional controller data conforming to the second controller protocol;
convert the additional controller data into converted encoder data conforming to the first encoder protocol according to the at least one controller protocol conversion rule; and
provide the converted encoder data to the encoder.
